# EUROPEAN PATENT APPLICATION

(11) **EP 2 014 187 A1**
(43) Date of publication of application: **14.01.2009**
(21) Application number: 08016403.1
(22) Date of filing: 28.01.2005
(51) Int. Cl.: A44B 18/00

(54) **Composite products**

(30) Priority: 29.01.2004 US 767660
(62) Divisional of application: 05726283.4
(71) Applicant: VELCRO INDUSTRIES B.V., Curacao (AN)
(72) Inventor: Armela, Luis Parellada, 17200 Palafrugell (ES); Munoz Herrero, Emilio J., 08304 Mataro (ES)
(74) Representative: Müller-Boré & Partner Patentanwälte

(57) **Abstract**

A composite comprises a projection component having an array of discrete projections (32) of resin extending from a surface of a base, and a preformed substrate (56) having a surface that is bonded to resin of distal ends of the projections (32). The preformed substrate (56) comprises a fibrous material wherein fibers of the fibrous material are encapsulated by resin of the projections (32).

## Description

### TECHNICAL FIELD

The present invention relates to forming a composite product having projections that extend from a surface of a base.

### BACKGROUND

There has been much development over the last thirty years in the field of hook-and-loop fasteners. Two such improvements are the development of continuous fastener tape molding using fixed mold cavities (see Fischer, U.S. Patent 4,794,028) and the ability to provide loops on the back side of the male fastener tape as the fastener tape substrate and elements are being formed (see Kennedy et al., U.S. Patent 5,260,015), thus creating a composite fastener tape capable of fastening to itself.

As another example of forming hook fasteners, described by U.S. Patent No. 6,303,062, thermoplastic resin is extruded, at a relatively high temperature, onto protrusions of a sheet of protrusions. The extruded resin can then be stripped from the protrusions to deposit material thereon to form fastener elements with heads.

### SUMMARY

In general, the invention features a composite product and methods of making the product.

In one aspect, the invention features a method for forming a composite product. The method includes providing a projection component that includes discrete projections of resin that extend from a surface of a base. The distal ends of the projections are locally heated and the projections are foreshortened. A preformed substrate is applied to the distal ends to bond the preformed substrate and the projection component.

Implementations of this aspect can include one or more of the following features. For example, the projections can be foreshortened before, during and/or after applying the preformed substrate. In some cases, the preformed substrate is bonded to the distal ends of the projections within discrete bonding zones that are spaced-apart from the base. In certain cases, the substrate is removable (e.g., manually, mechanically) from the distal ends of the projections. In some cases, a material is carried by the substrate and bonded to the distal ends of the projections. The material can be selected from a group consisting of pigments, sand, silicone, fiberglass and paints. In some embodiments, the preformed substrate leaves an imprint within resin of the distal ends of the projections upon removal of the substrate

In another aspect, the invention features a method of forming a composite product. The method includes providing a projection component that has projections that extend from a surface of a base. A preformed substrate is applied to the resin base such that at least one projection extends through the preformed substrate. The preformed substrate is affixed to the base by post-forming the at least one projection. In some cases, this aspect includes locally heating a distal end of the at least one projection. In some cases, post-forming the at least one projection may include contacting a distal end of the at least one projection with a contact surface.

Any of the above aspects can include one or more of the following features. The projections may be integrally molded with the base. In some cases, the distal ends of the projections are post-formed to form heads that overhang the base.

In a third aspect, the invention features a method for forming a fastener product having fastener elements comprising stem portions integrally molded with and extending from a sheet-form resin base and loop-engageable head portions. The method includes applying a preformed substrate to the stem portions forming an intermediate product having stems projecting through the preformed substrate and beyond an outer surface of the preformed substrate. The distal ends of the stems are heated and deformed to form head portions that overhang the sheet-form base.

Any of the above aspects can include one or more of the following features. For example, methods can include continuously introducing molten resin to a gap defined adjacent a periphery of a mold roll, such that resin forms at least a part of the base at the periphery of the mold roll and fills an array of fixed cavities defined in the rotating mold roll to form the projections. Methods can also include, solidifying the resin and stripping the resin from the periphery of the mold roll by pulling the solidified projections from their respective cavities.

In another aspect, the invention features a method for forming a fastener product having fastener elements comprising stem portions integrally molded with and extending from a sheet-form resin base and loop-engageable head portions. The method includes continuously introducing molten resin to a gap defined adjacent a periphery of a rotating mold roll, such that the resin forms at least a part of the base at the periphery of the mold roll and fills an array of fixed fastener element cavities defined in the rotating mold roll to form the fastener elements. The resin is solidified and stripped from the periphery of the mold roll by pulling the solidified fastener elements from their respective cavities. A preformed substrate is applied to the surface of the resin base forming an intermediate product having at least one of the fastener elements projecting through the sheet material and at least a portion of the at least one fastener element extending beyond an outer surface of the preformed substrate arranged to fasten the preformed substrate to the base. Implementations of this aspect can include heating and deforming the portion of at least one fastener element to affix the preformed substrate to the resin base.

In some cases, a plurality of stem portions of the fastener elements project through the preformed substrate and extend beyond an outer surface of the preformed substrate. Some or all of these stem portions may be heated and deformed.

Any of the above aspects can have one or more of the following features. Applying the preformed substrate may include pressing (e.g., from about 1 N/cm² to about 100 N/cm²) the preformed substrate against the heated distal ends. In some cases, a pair of pressure rolls applies the pressure. The preformed substrate can be bonded without use of an adhesive (e.g., using only resin forming the projections). In some embodiments, the distal ends are heated to a temperature greater than that of the preformed substrate. The distal ends can be heated by a non-contact heat source. Suitable non-contact heat sources include flame, electrically heated nichrome wire and radiant heater blocks. The preformed substrate may include fibers. When distal ends of the projections are heated, material of the projections can encapsulate fibers of the preformed substrate.

In some cases, applying the preformed substrate includes foreshortening the distal ends of the projections, forming flat, foreshortened distal ends of the projections that are bonded to a surface of the preformed substrate. In some cases, resin of the projections encapsulates fibers of the preformed substrate. In some embodiments, the projections include heads that extend radially outward in one or more discrete directions. In some embodiments, the cavities form engageable heads. In some embodiments, the heads extend radially outward in multiple directions forming mushroom-shaped heads. The heads may be sized to engage mating elements, such as loops of a loop material. In some cases, the heads are sized to secure to the preformed substrate to the base.

The preformed substrate can be a film, a woven material, paper, a thermoplastic sheet, a non-woven web of fibers and/or a mesh material. The preformed substrate material can be any material suitable for attachment to the projections and does not necessarily soften upon contact with the heated distal ends of the projections. In some cases, the preformed substrate is a different material than the projections. In some embodiments, the preformed substrate can be formed of plastic, metal, or wood. In some cases, the preformed substrate comprises a fiberous material.

In another aspect, the invention features a composite product that includes a projection component having an array of molded projections of resin extending from a surface of the projection component. A preformed substrate has a surface that is bonded to resin of distal ends of the projections.

Implementations of this aspect may include one or more of the following features. The preformed substrate may be bonded to distal ends of the projections within discrete bonding zones that are spaced-apart from the surface of the projection component. In these cases, the composite can include an intermediate material between the preformed substrate and the surface of the projection component. In some embodiments, the intermediate material is a gas, such as air. In some cases, the intermediate material includes fibers, such as fastener-engageable fibers. In some cases, the intermediate material includes a foam. In some embodiments, the preformed substrate is removable from the distal ends of the projections. In some cases, the preformed substrate includes a bonding material carried by the preformed substrate that is deposited within resin of the projections. In some of these cases, the bonding material is selected from a group consisting of pigments, sand, silicone, fiberglass and paints.

In yet another aspect, the invention features a composite product that includes a projection component having an array of projections that include a head portion and a stem portion forming fastener elements extending from a surface of the projection component. The composite also includes a preformed substrate adjacent the projection component where the stems of the projection component extend into the preformed substrate.

Implementations of this aspect may include one or more of the following features. A head portion of at least one of the fastener elements may overhang a surface of the preformed substrate. In some cases, the head portion is sized to trap the preformed substrate adjacent to the projection component. In some cases, the head portion is arranged to engage loops of a loop material. In some cases, at least one fastener element is deformed to form an attachment to attach the preformed substrate to the surface of the projection component.

Implementations of the above aspects directed toward a composite product may include one or more of the following features. The preformed substrate can be bonded without the use of an adhesive (e.g., using only material forming the projections). The preformed substrate may be a different material than the projections. In some cases, the preformed substrate is a non-woven, a woven fabric, paper, a thermoplastic sheet material and/or a mesh. In some embodiments, the preformed substrate is formed of a material selected from plastic, metal and wood. In some embodiments, the preformed substrate has a thickness that is less than 40 percent, e.g., 20 percent or less, of a total thickness of the composite. In some embodiments, the preformed substrate has a higher softening point than the projections. In some cases, the projections include flat head portions that extend radially outward in multiple directions. In some embodiments, the head portion overhangs the preformed substrate. In some embodiments, the projections include thermoplastic resin. In some embodiments, thermoplastic resin of at least one projection encapsulates fibers of the preformed substrate. The preformed substrate may be porous or non-porous.

In another aspect, the invention features a method of preventing engagement of a fastener product includes providing a projection component comprising a first array of fastener elements having stems extending from a first broad surface of a base to heads; attaching a preformed substrate to the heads of the first array of fastener elements to bond the preformed substrate to the projection component within discrete bonding zones spaced-apart from the first broad surface of the base; attaching a second array of fastener elements to an opposite, second broad surface of the projection component, the second array of fastener elements capable of releasable engagement with the first array of fastener elements; and positioning the second array of fastener elements adjacent the preformed substrate, the preformed substrate providing a barrier between the first and second array of fastener elements.

Implementations of this aspect can include one or more of the following features. The first array of fastener elements can be formed of thermoplastic resin. In some embodiments, the substrate is attached to the heads without the use of an adhesive (e.g., the substrate can be bonded to the heads using only material forming the heads). The step of positioning the second array of fastener elements adjacent the preformed substrate includes rolling the fastener product to form a roll. The second array of fastener elements includes a loop material, e.g., the pile of a carpet. The step of positioning the second array of fastener elements adjacent the preformed substrate includes stacking discrete lengths of the fastener product to form a stack.

Embodiments of the invention can have one or more of the following advantages. In some cases, a composite is provided that includes a hook-engageable preformed substrate (e.g., non-woven, woven, knit) bonded to the projection component. In these cases, the projections can serve as stops to reduce compression of the substrate over relatively large areas so that fibers of the hook-engageable preformed substrate tend to retain loft (i.e., the probability that the hook-engageable preformed substrate will become compressed, leading to a reduction in hook-engagability, is reduced). In some embodiments, the composite can be used as an insulator by spacing the preformed substrate from the base of the projection component. The space can be filled with, e.g., air or any other suitable substance including fibers and/or foams.

In some cases, the preformed substrate can be bonded to the projections without the use of adhesives. In certain ones of these cases, the preformed substrate can be bonded to the projections using only material forming the projections (e.g., using only thermoplastic resin forming the projections). This allows a wide variety of preformed materials to be bonded to the projections, including relatively thin sheets of various materials and materials having relatively high softening points, such as metals. In addition, in some cases, it is not necessary to soften the material forming the preformed substrate for bonding to occur between the projections and the preformed material. As a result, preformed substrates need not be pre-heated for bonding to occur.

In some embodiments, the substrate can be removed (e.g., manually, mechanically, etc.) to expose an array of fastener elements capable of releasably engaging a mating fastener component. By providing a removable substrate, the fastener elements can be relatively protected, e.g., during storage and/or transport, to minimize damage to the fastener elements.

The substrate can provide a temporary barrier between fastener elements and an adjacent, mating component. This can facilitate handling and storage of inter-engageable fastener products, such as stacks or rolls of composite fastener products, by providing a barrier between adjacent matable elements.

The details of one or more embodiments of the invention are set forth in the accompanying drawings and the description below. Other features and advantages of the invention will be apparent from the description and drawings, and from the claims.

### DESCRIPTION OF DRAWINGS

FIG. 1 is a side view of an embodiment of an apparatus for forming a composite.
FIG. 1A is an enlarged diagrammatic, sectional side view of the composite at detail A of FIG. 1.
FIG. 2 is a side view of another embodiment of an apparatus for forming a composite.
FIGs. 2A and 2B are enlarged diagrammatic, cross-sectional side views of various composite embodiments at detail A of FIG. 2.
FIG. 3 is a side view of an embodiment of an apparatus for forming a fastener product.
FIG. 4 is a perspective view of a fastener element having an imprinted surface.
FIG. 5 illustrates a method of depositing a material at distal ends of projections.
FIG. 6 is a front view of an apparatus for forming a composite.
FIG. 7 is a sectional view of a composite formed by the method illustrated in FIG. 6.
FIG. 8 is a side view of another apparatus for forming a composite.
FIG. 9 is a detail view of area 9 of FIG. 2, showing a portion of the projection component prior to lamination. FIG. 9A is an enlarged view of one of the stems shown in FIG. 9.
FIG. 10 is a sectional end view of a composite engaged with a mating fastener product.
FIG. 11 illustrates a method of removing a substrate from a composite by hand.
FIG. 12 is a diagrammatic view of a roll of an automotive carpet having a composite attached thereto. FIG. 12A is a detail view about line A of FIG. 12.
FIG. 13 is a diagrammatic view of a stack of discrete pieces of a composite product.
FIG. 14 shows another embodiment of an apparatus for forming a composite.
FIG. 14A is a sectional end view of a composite along line A of FIG. 14.

Like reference symbols in the various drawings indicate like elements.

### DETAILED DESCRIPTION

Various methods described below utilize the continuous extrusion/roll-forming methods for molding fastener elements on an integral, sheet-form base described by Fischer in U.S. Patent 4,794,028, the disclosure of which is incorporated herein by reference. The relative sizes and positions of the rolls and other components illustrated in the figures are schematic and are not to scale.

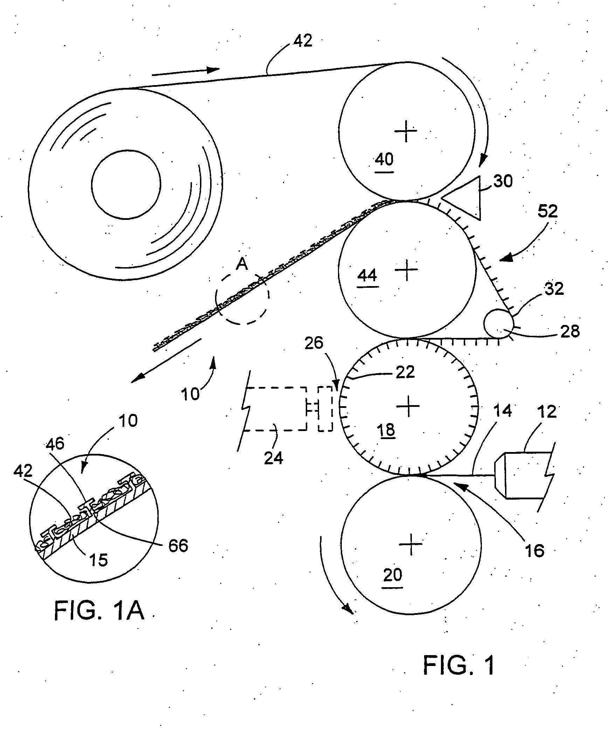

Referring particularly to Fig. 1, a method and apparatus for forming a fastener product 10 is shown. An extruder 12 supplies a continuous sheet of molten resin 14 (e.g., polyester copolymer, nylon, polypropylene, polyethylene) to a gap 16 defined by a mold roll 18 and a pressure roll 20. Mold roll 18 contains an array of miniature mold cavities 22 extending inwardly from a peripheral surface of the mold roll 18 for forming projections. As the resin enters the gap 16, some of the resin is forced into cavities 22, forming projections 32 due to the pressure in the gap and at the same time excess resin 14 forms a base 15 from which the projections 32 extend.

As an alternative, as illustrated by the dashed lines in Fig. 1, an extruder 24 can extrude resin to a gap 26 defined by the extruder and the mold roll 18. The extruder 24 can extrude resin 14 at a sufficient rate to force the resin to enter and at least partially fill the mold cavities 22, while excess resin forms the base 15. The rate of resin 14 entering the gap is controlled by a gear pump (not shown) that is positioned at the outlet of the extruder 12, 24.

The cavities 22 extend inwardly to form stem-shaped projections 32 that are integrally molded with the base 15. The cavities can also be hook-shaped to form hook-shaped projections having head portions that overhang the base 15 and stem portions that are integrally molded with the base.

As resin travels around the periphery of mold roll 18, it is at least partially cooled, solidifying the resin. The projections 32 are then stripped from their respective cavities by a stripper roll 28 to form a projection component 52. Along with the resin 14, a sheet material (not shown) can also be introduced to the gap 16, allowing the sheet material to be partially impregnated by resin and become permanently bonded to a face of the resin base. This is described in detail by Kennedy et al. in U.S. Patent 5,260,015, the disclosure of which is incorporated herein by reference.

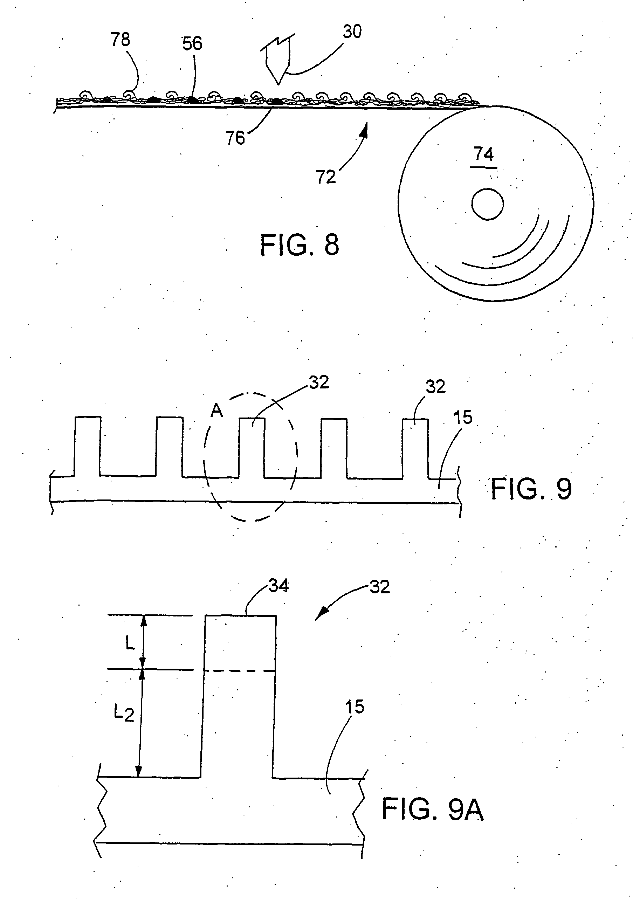

After stripping the solidified resin from the mold roll cavities 22, the resin preform is directed to a heater 30 where distal ends of the projections are heated. As indicated in Figs. 9 and 9A, only a portion L of the projections 32, adjacent their tips 34, is heated by heating device 30, leaving the remainder of the projection relatively cool and thus relatively rigid. The heated portion is heated to a softening temperature at which the distal end can be formed into a desired head shape, typically a temperature that is greater than or equal to the Vicat temperature of the thermoformable polymer. The remainder of the projection (L₂) is not heated, and remains at a temperature that is less than the softening temperature.

To ensure that only a portion of the projection 32 is heated to the softening temperature, it is preferred that heating device 30 include a non-contact heat source that is capable of quickly elevating the temperature of material that is very close to the heat source, without raising the temperature of material that is relatively further away from the heat source. Suitable non-contact heat sources are disclosed, e.g., in U.S. Patent 6,248,276, the disclosure of which is hereby incorporated by reference. Such heat sources can include flame heaters, electrically heated nichrome wire, and radiant heater blocks. To heat to the softening temperature without contact, the heat source typically must be at a relatively high temperature. For example, if the softening temperature is from about 100 to 140 °C, the temperature of the heat source will generally be from about 300 to 1000 °C and the heat source will be positioned from about 0.1 to 30 mm from the tips of the stems. In some embodiments the temperature of the heat source may be about equal to the softening temperature of the stem-forming material. For example, in some embodiments, it is preferable to form stems of a polyamide (e.g., nylon) having a softening temperature of about 260 °C. In these embodiments, the heat source can be about 260 °C.

After the distal ends of the stems have been heated, the base 15 moves to a conformation head 40 that carries a preformed substrate 42 that is formed such that it is penetrable by projections 32. Preformed substrate 42 is delivered to a surface of the base 15 forcing projections 32 at least partially through the preformed substrate, while the projection component 52 passes between conformation roll 40 and drive roll 44. Conformation roll 40 forms the distal end of the projections into a desired head shape, while the preformed substrate is delivered to the projection component 52. Resin of the formed heads 46 encapsulates fibers of the preformed substrate, the heads serving to affix the preformed substrate 42 adjacent to the base 15 (see Fig. 1A). The product 10 can then be directed to a storage roll (not shown) for future processing or use.

Generally, preformed substrate 42 may or may not be fastener element engageable, but is porous enough to allow the projections 32 to extend into preformed substrate. Suitable preformed substrates for use in this embodiment include, for example, wovens, non-wovens, mesh products such as a screen, and foams. Depending, at least in part, on the height of the projections and thickness of the substrate, in some cases, projections 32 extend only partially through preformed substrate 42. It may be desirable for preformed substrate to be formed of an absorbent material to control fluid flow.

It is preferred that the temperature of conformation roll 40 (the forming temperature) be lower than the softening temperature of the resin material forming the projections. Maintaining the conformation roll 40 at this relatively low temperature has been found to prevent adhesion of the thermoformable polymer to the conformation roll. Generally, to obtain the desired forming temperature it is necessary to chill the conformation roll, e.g., by running cold water through a channel in the center of the roll, to counteract heating of the conformation roll by the heat from distal ends of the stems. If further cooling is needed to obtain the desired forming temperature, the drive roll may be chilled in a similar manner.

In some cases, it may be preferable to deliver preformed substrate 42 to the projection component prior to heating projections 32 and forming heads 46. This reduces encapsulation of, e.g., fibers, of preformed substrate 42 as projections 32 penetrate. After delivering preformed substrate 42 to the projection component, distal ends of projections 32 can be heated and post-formed, as described above. Using this variation, heads 46 can be formed that overhang preformed substrate 42 and serve to trap the substrate under the overhanging heads.

Referring now to Fig. 1A, a composite fastener product, formed by the apparatus of Fig. 1, includes projections 32 extending through preformed substrate 42 with fibers of preformed substrate 42 encapsulated by resin forming heads 46.

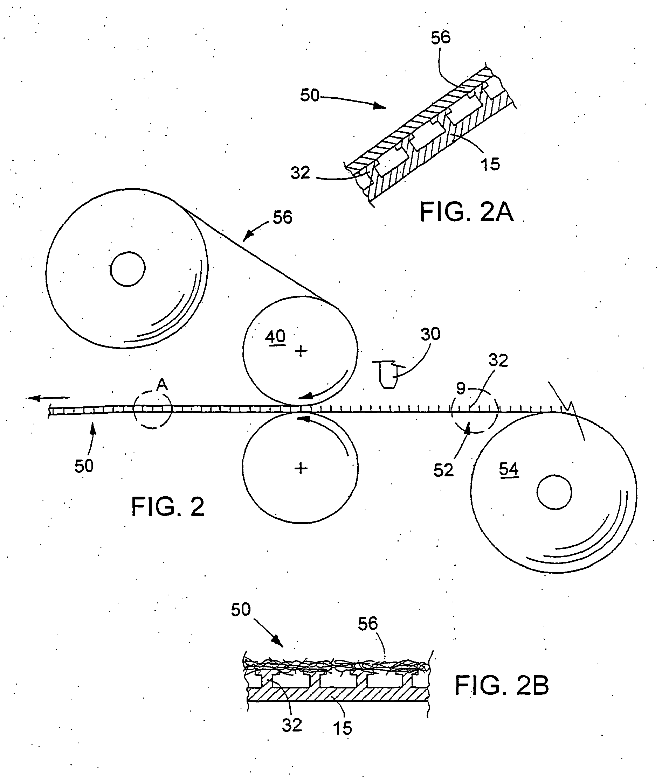

Fig. 2 shows an apparatus for forming a fastener product 50. A projection component 52 having a base layer 15 with stem-shaped projections 32 is provided. The projection component can be formed using the method described above, or any other suitable method for forming a base layer having projections extending from a surface of the base. As above, the projection component is directed to a heater 30 that heats the distal ends of the thermoplastic projections 32. The heated projections move to the conformation roll 40, which is carrying preformed substrate 56. Preformed substrate 56 is brought into contact with distal ends of the heated projections and is bonded to the resin of the distal ends of the projections, spaced-apart from the base 15 while the distal ends of the projections are foreshortened and flattened to form heads that overhang the base. The preformed substrate is typically delivered at a lower temperature than the heated distal ends of the projections, although it may be desirable to heat the preformed substrate prior to delivery. The heated distal ends of the projections 32 serve as discrete bonding zones spaced from the base in which the preformed substrate is bonded, without use of additional bonding agent, such as adhesives.

In some embodiments, the distal ends of the projections may be foreshortened and/or flattened with conformation roll 40 prior to delivering the preformed substrate to the heated distal ends of the projections 32. Where the distal ends are foreshortened and/or flattened prior to delivering the preformed substrate 56, it is preferable that a pressure roll be used to exert pressure on the preformed substrate 56 and projections 32 to bond the preformed substrate 56 to the distal ends of the projections 32. In some cases, heat from a heat source may be applied to soften the foreshortened and/or flattened distal ends prior to delivery of the preformed substrate to facilitate bonding between the substrate and the distal ends.

Importantly, the pressure exerted on the projections 32 within the gap is high enough to secure the preformed substrate 56 to the projection component 52 in the discrete bonding zones at the distal ends of the projections 32. The pressure is low enough, however, for the preformed substrate, within the bonding zones, to remain spaced-apart from the base 15 of the projection component 52.

In the embodiment shown in Fig. 2, the preformed substrate may or may not be fastener element engageable and can include both relatively porous and relatively non-pourous constructions such as, a non-woven fabric, a woven fabric, a film, paper, a resin sheet, a mesh product (e.g., a net or screen), made of any suitable material such as paper, metal, plastics, including thermoplastic resin. The preformed substrates can also include materials having a softening point higher, even much higher, than the softening point of the projection material. In certain cases, it may be desirable to bond a non-porous, or semi-porous preformed substrate to the ends of the projections, that can prevent or reduce flow of liquid or gas therethrough. The preformed substrate can be relatively thin, such as a thin plastic film or paper. The thickness of the preformed substrate t' can be less than 40 percent of a total thickness t of the composite (e.g., less than 30 percent, less than 20 percent, less than 15 percent, less than 10 percent, less than 5 percent, etc. of the thickness of the composite).

Referring to Fig. 2A, preformed substrate 56 is a relatively non-porous, continuous film formed of a different material than that forming the projections 32. Projections 32 bond to an outer surface 58 of the film and form foreshortened projections having flat ends that conform to the surface of the film. Where a porous preformed substrate is used, e.g., a non-woven web of fibers, woven fibers, mesh materials, heated resin can encapsulate the preformed substrate to bond the preformed substrate to the distal ends of the projections (see Fig. 2B). In some embodiments, preformed substrate 56 is formed of the same material as projections 32.

In the embodiments shown by Figs. 2A and 2B, the preformed substrate 56 is bonded to projection component 52 in discrete bonding zones of resin at the distal ends of projections 32. The distal ends have been foreshortened and flattened to form overhanging heads, as described above. The preformed substrate 56, within the bonding zones, is spaced-apart from the resin base 15, forming a space that is interrupted by the projections 32.

Referring particularly to Fig. 2A, the preformed substrate is bonded at its surface with the resin of projections 32 not penetrating substantially into the preformed substrate. In some cases, where a relatively porous preformed substrate is used, the resin penetrates substantially beyond the surface and into the substrate. In some embodiments, the heated distal ends are at a temperature low enough to minimize the deformation, if any, of the preformed substrate, yet high enough to bond permanently to the surface of the preformed substrate.

Fig. 2B illustrates a composite having a non-woven preformed substrate bonded to the distal ends of the projections. The heated resin of the distal ends of the projections encapsulates fibers of the non-woven, thus penetrating an outer surface of the non-woven preformed substrate. The non-woven preformed substrate can also be adapted to engage fastener elements of a fastener component to form a touch fastener.

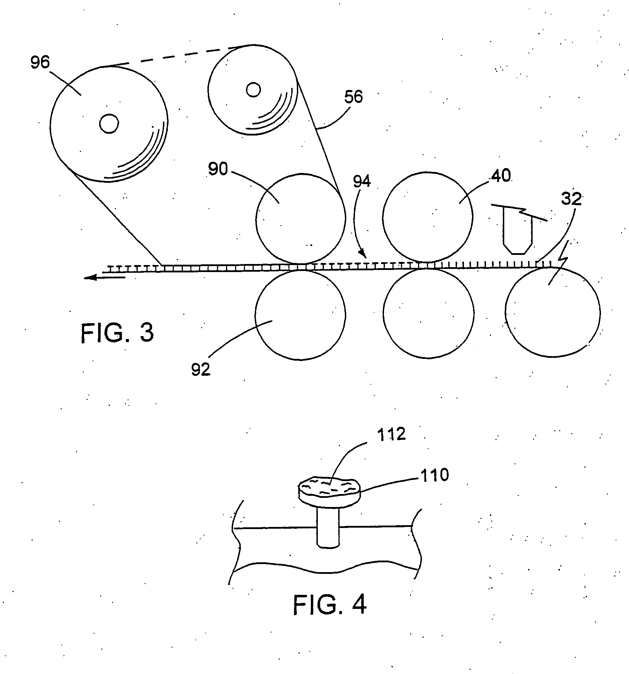

In some cases, it may be desirable to remove preformed substrate 56 after bonding the preformed substrate to distal ends of the projections 32 to expose, e.g., the overhanging heads. In these cases, preformed substrate 56 is bonded to distal ends of the projections such that the preformed substrate can be removed upon application of a sufficient peel force (e.g., by machine such as a take-up roll, by hand). Referring now to Fig. 3, a method is shown that includes continuously removing or stripping preformed substrate 56 from distal ends of projections 32 subsequent to bonding the preformed substrate to the distal ends. The method includes forming a projection component 52 by any suitable method including those described above. The projection component is directed to a heater 30 that heats the distal ends of the projections 32. The heated projections move to the conformation roll 40, where the heated distal ends of the projections are foreshortened by the conformation roll to form engageable fastener elements 94 having overhanging heads. Projection component 52 is then directed to a pair of pressure rolls 90 and 92 where preformed substrate 56 is bonded to the heads of the fastener elements due to pressure exerted by the pressure rolls. In some embodiments, the heads are heated prior to delivering the preformed substrate 56 to the heads. After bonding preformed substrate 56 to the heads of fastener elements 94, the preformed substrate is continuously removed by a take-up roll 96. Take-up roll 96 is capable of peeling preformed substrate 56 from the heads of fastener elements 94. As an alternative, preformed substrate 56 can be removed in a non-continuous or a continuous fashion later downstream by, for example, an end user or customer.

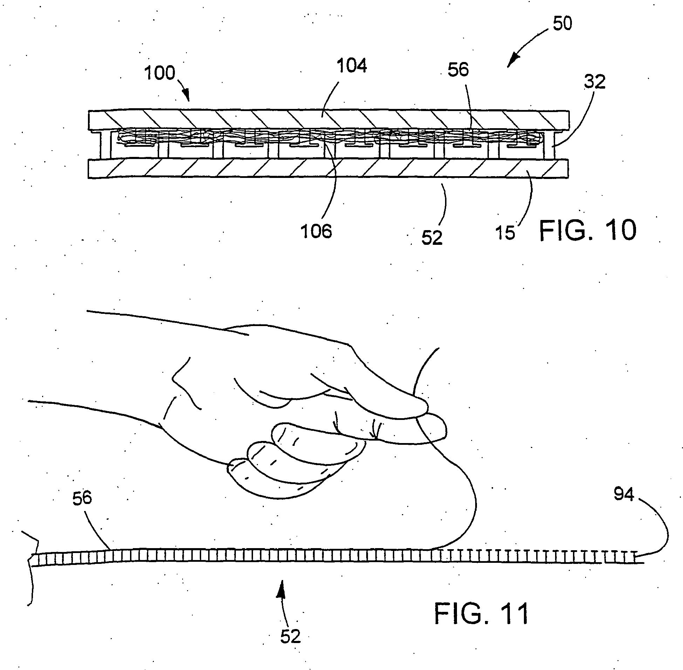

In some embodiments, it is preferable that the peel force needed to remove preformed substrate 56 be low enough so that the preformed substrate can be removed from the ends by hand (see Fig. 11). The strength of the bond between the ends and preformed substrate 56 is affected by several factors including the preformed substrate material, the material used to form the projections, and the pressure applied during bonding. In some embodiments, a calendaring pressure of at least about 1 N/cm² to at most about 100 N/cm² is applied to each projection to bond the preformed substrate to ends formed of thermoplastic resin.

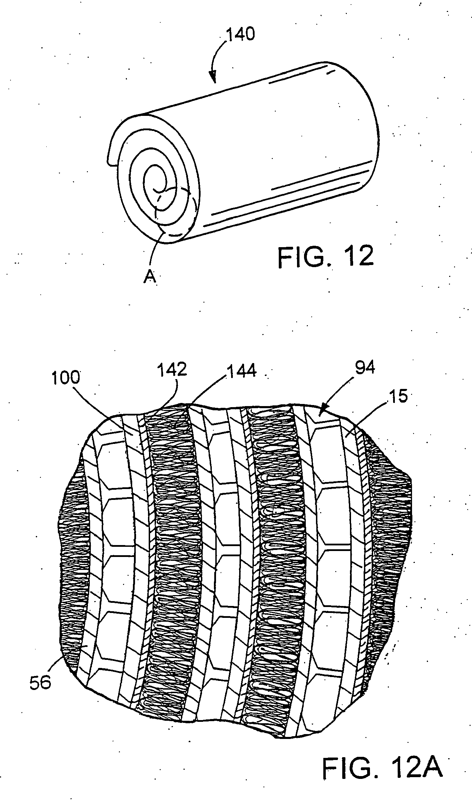

Use of a removable preformed substrate may be particularly useful in, e.g., protecting the fastener elements from deformation during shipping and reducing unintended or unwanted fastener engagement between adjacent fastener products. For example, referring to Figs. 12 and 12A, a roll 140 of an automotive product including an automotive carpet and fastener elements capable of engaging piles of the automotive carpet is shown. As shown by Fig. 12A, a projection component 100 having fastener elements 94 extending from a surface 103 of a base 15, is attached at surface 101 to carpet 142, opposite carpet fibers 144. A preformed substrate 56 is bonded to the heads of the fastener elements 94. Preformed substrate 56 serves as a barrier between spirals of roll 140 to minimize or prevent engagement between carpet fibers 144 and fastener elements 94. Projection component 100 also serves to maintain a relatively precise distace between sprials of the roll. As or after the automotive product is unrolled, the preformed substrate 56 can be removed.

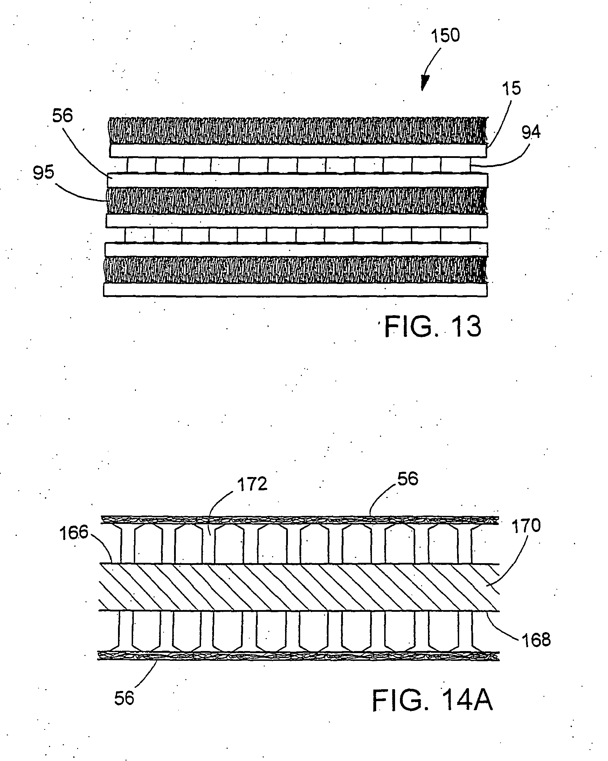

Fig. 13 shows a stack 150 of fastener product having fastener elements 94 extending from a first broad surface of a resin base 15 and fastener element engageable loops 95 extending from an opposite, second broad surface of the resin base. Preformed substrate 56 is bonded to the heads of fastener elements 94 to provide a barrier between sheets of the fastener product. Once a product is removed from the stack, preformed substrate 56 can then be stripped away, exposing fastener elements 94 and rendering them capable of engaging loops 95 extending from the opposite side of resin base 15.

In cases where substrate 56 is removable, either the substrate or the projection component can be disposable. For instance, it may be desirable to bond the substrate to the heads of fastener elements to protect the fastener elements, e.g., from deformation during transport and storage. The substrate can be formed of a relatively inexpensive material, such as a polyester nonwoven, that can be e.g., discarded or recycled after removal. In other cases, it may be desirable to bond the substrate to a projection component to protect the substrate (e.g., to maintain loft). As described with regard to Fig. 10, below, the projections of the projection component can serve as stops or spacers that resist pressure over relatively large areas of substrate, e.g., from a mating fastener component, between spirals of a roll or between layers of a stack. In this case, the projection component can be formed from a relatively inexpensive material, that can be, e.g., discarded or recycled after removal.

The material and form of removable substrate can be selected as desired. Suitable materials for forming a removable preformed substrate include, e.g., polyester and polypropylene. The preformed substrate can be in in the form of woven materials, nonwoven materials, knit materials, mesh materials, and films including transparent or semi-transparent films to allow for viewing of the fastener elements through the transparent or semi-transparent film.

Referring back to Fig. 3, in some embodiments an imprint can be imparted to the heads of the projections upon removing preformed substrate 56 from the ends of the projections. In certain cases, preformed substrate 56 includes a predetermined, preformed texture and/or pattern (e.g., dots, dimples, divots, holes, waves, lines, mesh). Any suitable preformed substrate can be used having a desired surface texture (e.g., mesh materials, woven materials, paper including crepe and corrugated paper, plastic sheet). In some cases, it may be desirable to mold, carve, or otherwise form a desired surface texture on preformed substrate 56 prior to bonding the preformed substrate to the heads of fastener elements 94. In other cases, preformed substrate can include a random texture such as that produced by, for example, a non-woven material, sandpaper, etc. In some embodiments, preformed substrate 56 has a smooth surface finish, such as a non-porous plastic film, as an example, to impart a smooth surface finish to heads of the fastener elements. This may be desirable to reduce peel strength between the fastener elements and a mating fastener component (not shown).

Referring now to Fig. 4, a head 110 having a textured surface formed by the method of Fig. 3 is shown. The head 110 includes a rough, sandpaper-like surface 112. Sandpaper-like surface 112 includes protrusions that tend to catch on a mating fastener component with which head 110 is engaged (not shown), making it more difficult to inadvertently disengage the mated fastener components. As a result, the strength of engagement is generally increased, relative to the strength obtained from a similar fastener element having a smooth surface. In particular, in preferred embodiments the peel strength, as measured by ASTM D 5170-91 ("T" method), is increased by about 10 to 100%. It is preferred that the surface 112 have a surface roughness (rugosity) of at least 10 microns, more preferably from about 10 to 200 microns.

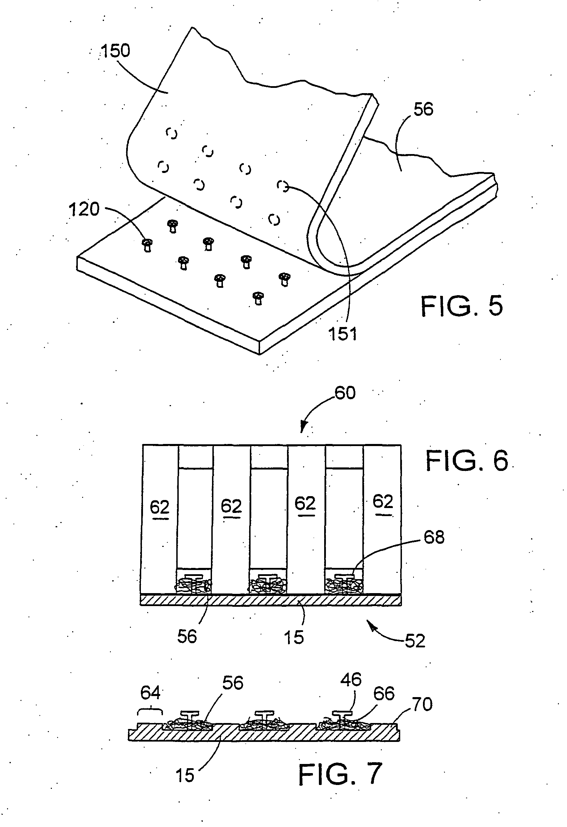

In a method similar to that shown by Fig. 3, preformed substrate 56, in some embodiments, carries a material on its surface that can be deposited within material forming the projections. Referring to Fig. 5, a broad surface of preformed substrate 56 carries a pigment 150. As preformed substrate 56 is bonded to the ends of the projections in the form of heads of fastener elements, as described above, pigment 150 is also bonded to heads 120 within bonding zones 151. As preformed substrate 56 is stripped from heads 120, pigment 150 is removed from the surface of preformed substrate 56 within bonding zones 151 and remains bonded to the heads, imparting a colored surface to the heads. As above, preformed substrate 56 can be removed in a non-continuous or a continuous fashion later downstream by, for example, an end user or customer. In some cases, the preformed substrate 56 can be removed from the heads manually.

Preformed substrate 56 can carry any other suitable material (e.g., silicon, fiberglass, powdered metals, magnetic materials, glass, adhesives, liquids including paints), to be deposited within the material forming the heads of the fastener elements. In some cases, a bonding agent is used to adhere the material to be deposited to the preformed substrate 56 prior to bonding the preformed substrate to the fastener element heads. The bonding material retains the material to be deposited on the preformed substrate and allows the material to be removed from the surface of the preformed substrate upon stripping the preformed substrate from the heads of the fastener elements. In some embodiments, a roller, such as a printing roller, applies the material to be deposited, and the bonding material, if one is used, to the preformed substrate prior to bonding the preformed substrate to the heads of the fastener elements. A transparent or semi-transparent preformed substrate can be used to view material carried by the preformed substrate and bonded to the heads of the fastener elements.

Referring back to Fig. 3, another method is illustrated, in which an endless belt 200 (illustrated in part by dashed lines) of a preformed substrate is bonded temporarily to heads of fastener elements 94 and then removed. As above, in some embodiments, endless belt 200 has a desired textured surface to leave an imprint on heads of fastener elements 94 upon removal of endless belt 200 of preformed substrate. In certain embodiments, endless belt 200 carries a material to be bonded to heads of fastener elements 94, also as described above. In these cases, an applicator (not shown), such as a printing roll or sprayer, can be used to re-coat areas of endless belt 200 of preformed substrate as material is deposited on the heads of fastener elements 94. A heat source 93 can heat the formed heads to facilitate bonding between the preformed substrate and the fastener elements 94.

Referring now to Fig. 6, another method and apparatus to affix a preformed substrate to a projection component using a forming roll 60 having regions 62 of greater diameter is shown. A projection component 52 having a penetrable, preformed substrate 56 (e.g., non-woven materials, woven materials, knit materials, mesh materials) positioned adjacent to its base 15 is introduced to a gap formed between the forming roll 60 and a pressure roll (not shown). The projections, in the form of fastener elements, have been reheated to soften the projections, prior to entering the gap. The forming roll 60 includes regions 62 of greater diameter that create zones of contact as the projection component passes through the gap. Forming roll 60, within regions 62, exerts pressure in predetermined areas along the projection component. As the projection component passes through the contact zones, the heated projections in those zones are deformed, thus fastening the preformed substrate in discrete bonding zones 64 (see Fig. 3) to a surface of the resin base 15. Projections in areas outside the contact zones remain relatively undeformed and remain capable of engagement. The preformed substrate also remains relatively underformed in areas outside the bonding zones and remains hook-engageable, if it is a hook engageable material. In some embodiments, the forming roll 60 can be heated or, in other embodiments, the projections can be cold-formed to fasten the preformed substrate to the base.

Referring now to Fig. 7, a composite formed by the method of Fig. 6 is shown. The composite includes a resin base 15 having stems 66 integrally molded with and extending from the resin base 15. The stems include engageable heads 68 that have been formed at distal ends of the stems 66. As discussed above, the preformed substrate 56 (e.g., a nonwoven) is penetrable by the projections and is affixed to the base in discrete bonding zones 64 where the resin of the deformed projections has trapped and/or encapsulated fibers of the substrate.

Fig. 8 illustrates an alternative embodiment to the method illustrated in Fig. 7. A projection component 72 is directed from a storage roll 74 to a heater 30, which selectively heats certain projections to a temperature sufficient to deform the projections and to form bonds 76 while leaving other projections unheated. Bonds 76 affix preformed substrate 56 to a surface of a resin base of the projection component, while unheated projections extend through the preformed substrate and are capable of engagement with a mating preformed substrate, which can include preformed substrate 56. Here, the projections are hook-shaped fastener elements 78 having engageable heads in the form of unidirectional hooks. However, the projections can have a variety of forms including mushrooms, flat-tops, stems, multi-directional hooks, and the like.

As discussed briefly above, in some embodiments the projections can serve as stops or spacers, e.g., to preserve loft of a substrate by reducing compression of the substrate while the composite is enagaged with a mating fastener component. For example, referring to Fig. 10, composite 50, formed by the process described with reference to Fig. 2, includes a preformed substrate 56 that is formed of a fastener engageable material and is bonded to distal ends of projections 32 in discrete bonding zones that are spaced-apart from base 15. As fastener component 100 is brought into engagement with composite 50, surface 106 of the fastener component approaches the distal ends of the projections 32. As surface 106 approaches, projections 32 resist penetration of fastener component 100.

The following examples are intended to be illustrative and not limiting

### EXAMPLE A

An apparatus similar to that described with reference to Fig. 1 was set up to produce a projection component having stem-shaped projections extending integrally from a base using a polypropylene resin. After stripping the projection component from the mold roll, it was directed to a heater where the distal ends of the stems were heated to a temperature of 350 degrees F. The heated distal ends were then contacted by a conformation roll similar to that shown in Fig. 3, that was cooled to about 49 to 50 degrees F, where overhanging heads were formed extending outwardly in multiple radial directions from the stems. A roll of stretched nonwoven fabric, identified as loop 3310, formed of polyester fibers, available from Velcro USA was directed to the heads by a pressure roll where the fabric was bonded to the heads between the pressure roll and a counter rotating pressure roll. Line speed was 50 feet per minute; projection component width was 12 inches; calendaring pressure was 0.5 mm gage. The pressure roll temperature was 100 degrees F and the preformed substrate temperature was 70 degrees F.

The nonwoven fabric was encapsulated by the plastic of the fastener element heads. The composite thus formed could be separated into its constituents by hand, one from the other, without destroying either the fiber layer or the fastener elements. The surface of the heads, with the fabric removed, manifested a somewhat rough imprinted pattern of random grooves. The fastener elements retained their ability to engage mating fastener elements.

### EXAMPLE B

Exactly the same set up as described above in Example A, however, a roll of nonwoven fabric identified as Lutradur 3025, formed of polyester fibers, available from Freudenberg was directed to the heads by a pressure roll where the fabric was bonded to the heads. As above, the nonwoven fabric was integrated into the plastic of the fastener element heads. The composite thus formed could be separated into its constituents by hand, one from the other, without destroying either the fiber layer or the fastener elements. The surface of the heads, with the fabric removed, manifested a somewhat rough imprinted pattern of random grooves. The fastener elements retained their ability to engage mating fastener elements.

### EXAMPLE C

Exactly the same set up as described above in Examples A and B, however, a roll of knit fabric identified as loop 3200, formed of polyester yarns, available from Velcro USA was directed to the heads by a pressure roll where the fabric was bonded to the heads. As above, the knit fabric was integrated into the plastic of the fastener element heads. The composite thus formed could be separated into its constituents by hand, one from the other, without destroying either the fiber layer or the fastener elements. The surface of the heads, with the fabric removed, manifested a somewhat rough imprinted pattern of relatively structured grooves. The fastener elements retained their ability to engage mating fastener elements.

A number of embodiments of the invention have been described. Nevertheless, it will be understood that various modifications may be made without departing from the spirit and scope of the invention. For example, in some cases, embodiments described above can be used in combination. It may be desirable to deliver a preformed substrate to the base of the fastener component, as described above, and then bond a second preformed substrate to the distal ends of the projections, in discrete bonding zones spaced from the base.

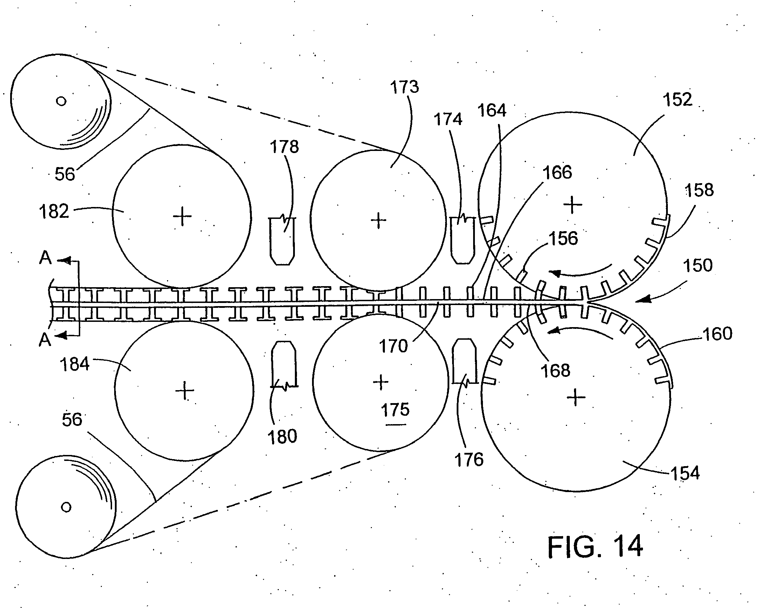

In another variation, projections are formed extending from opposite broad surfaces of a base. Referring to Fig. 14, thermoplastic resin is fed through a nip 150 formed by two mold rolls 152, 154, rotating in opposite directions. Each mold roll 152, 154 defines an array of stem (or hook) forming cavities 156, similar to those described above. In the embodiment shown, two streams 158, 160 of molten thermoplastic resin are fed into nip 150, by, for example, a pair of extruders (not shown) having heads positioned adjacent a periphery of a respective mold roll. Alternatively, streams 158, 160 are initially two solidified thermoplastic resin films. The temperature and pressure conditions in the nip force the thermoplastic resin (whether initially molten or solid) to at least partially fill the cavities so that the solidified projection component 162 stripped from the exit side of the nip has stem-shaped projections 164 (or hook-shaped fastener elements) protruding from opposite broad surfaces 166, 168 of a base 170 of thermoplastic resin.

Projection component 162 is then directed to a pair of heaters 174, 176 that heat distal ends of the stem-shaped projections 164 and a pair of conformation rollers 173, 175 that foreshorten the stem-shaped projections to form mushroom-shaped fastener elements having overhanging heads 172 that can engage mating fastener elements (e.g., loops).

The foreshortened distal ends are then directed to heaters 178, 180, that reheat the distal ends to soften the resin and then preformed substrates 56 are directed to the heated heads 172 of the fastener elements extending from each of the opposite broad surfaces of the base and bonded thereto by pressure rolls 182, 184 within discrete bonding zones that are spaced-apart from base 170.

Referring to Fig. 14A, attached in discrete zones to resin of the projection component 162 is a pair of preformed substrates 56. Preformed substrates 56, as shown, are non-woven materials, but can be any other suitable material as described above with reference to Fig. 2. Preformed substrates 56 can be the same material, or they can be materials different from each other. In some embodiments, both preformed substrates are removable. In some embodiments, only one preformed substrate is removable. Alternatively, in some cases, both preformed substrates are permanently attached. In certain embodiments, one or both preformed substrates carry a material to be deposited within resin of the projections as the preformed substrates are bonded to the projection component, as described with reference to Fig. 5. In some cases, preformed substrate(s) 56 has a textured surface that can leave a desirable imprint within resin of heads 172, as described with reference to Fig. 4.

Fig. 14 shows another method where preformed substrate 56 is delivered to base 170 of the projection component, similar to the method described with reference to Fig. 1. As shown by broken lines, preformed substrates 56 are directed to conformation rolls 173, 175 where the preformed substrates are delivered to a base 170 as the distal ends of stem-shaped projections 164 are foreshortened to form overhanging heads. As described above, the preformed substrates can be delivered to the base prior to forming the overhanging heads. In some embodiments, one preformed substrate is bonded within discrete bonding zones, spaced from the base and the other preformed substrate is delivered to the base and, e.g., trapped beneath heads of fastener elements.

Other suitable methods can be employed to form the projection component. For example, a longitudinally extending projection extending from a base can be extruded. The longitudinally extending projection can then be cut at predetermined locations along the length of the longitudinally extending projection to form an array of discrete projections extending from the base. The base can be stretched to increase the distance between individual ones of the array of projections. The preformed substrate can then be bonded to the projection component as described above. In another embodiment, the projection component can be formed of woven fibers where at least some of the fibers extend upwardly from a base formed by the woven fibers. Accordingly, other embodiments are within the scope of the following claims.

## Claims

1. A composite comprising:
a projection component having an array of discrete projections of resin extending from a surface of a base; and
a preformed substrate having a surface that is bonded to resin of distal ends of the projections, the preformed substrate comprising a fibrous material, and fibers of the fibrous material being encapsulated by resin of the projections.

2. The composite of claim 1, wherein the preformed substrate comprises a different material than the projections.

3. The composite of claims 1 or 2, wherein the preformed substrate is bonded to resin of the distal ends without use of an adhesive.

4. The composite of any of claims 1 to 3, wherein the projections include head portions that extend radially outwardly in multiple directions and/or wherein the projections include head portions that extend radially outwardly in one or more discrete directions.

5. The composite of any of claims 1 to 3, wherein the preformed substrate is bonded within discrete bonding zones that are spaced-apart from the surface of the projection component.

6. The composite of any of the preceding claims, wherein the preformed substrate includes a material carried by the preformed substrate deposited within resin of the projections, particularly wherein the material carried by the preformed substrate is selected from a group consisting of pigments, sand, silicone, fiberglass and paints.

7. The composite of any of the preceding claims, further comprising an intermediate material positioned between the preformed substrate and the surface of the projection component, particularly wherein the intermediate material is selected from a group consisting of gas, non-wovens and wovens and/or wherein the intermediate material is fastener element-engageable.

8. The composite of any of the preceding claims, wherein the preformed substrate contacts the surface from which the projections extend.

9. The composite of any of the preceding claims, wherein the projections comprise head portions and stem portions forming fastener elements, and the fastener element stem portions extend into the preformed substrate.

10. The composite of the preceding claim, wherein the head portions overhang the projection component, particularly wherein the head portion overhangs the preformed substrate.

11. The composite of the preceding claim, wherein the head portions are sized to trap the second preformed substrate adjacent to the first preformed substrate, particularly wherein the head portions are arranged to engage loops of a loop material and/or wherein thermoplastic resin of head portions encapsulate fibers of the preformed substrate.
